# EUROPÄISCHE PATENTANMELDUNG

(11) **EP 0 549 930 A1**
(43) Veröffentlichungstag der Anmeldung: **07.07.1993**
(21) Anmeldenummer: 92120961.5
(22) Anmeldetag: 09.12.1992
(51) Int. Cl.: F02C 3/30, B01D 53/34, F02C 6/16

(54) **Gasturbogruppe**

(30) Priorität: 31.12.1991 DE 4143226
(71) Anmelder: ASEA BROWN BOVERI AG, CH-5401 Baden (CH)
(72) Erfinder: Frutschi, Hansulrich, CH-5223 Riniken (CH); Hellat, Jaan, Dr., CH-5406 Rütihof-Baden (CH)
(74) Vertreter: Klein, Ernest

(57) **Zusammenfassung**

Bei einer Gasturbogruppe mit mehreren unabhängigen Druckstufen, mit oder ohne integriertem Dampfprozess (20), welche mit einer Luftspeicherkaverne (5) erweitert ist, wird stromab der ersten Turbine (15) und des ersten Wärmeerzeugers (7), und stromauf eines weiteren Wärmeerzeugers (18) in die Abgase Ammoniak (16) eingedüst. Der Ort (17) dieser Eindüsung berücksichtigt, dass die sogenannte selektive Stickstoff-Konversion durch eine Ammoniak-Eindüsung Wirksamkeit entfaltet, wenn ein Temperaturfenster von 800-900 Grad Celsius vorhanden ist. Durch eine gezielte kalorische Aufbereitung der Heissgase und entsprechende Auslegung der Hochdruckturbine (15) wird jenes Temperaturfenster bereitgestellt, bei welchem durch Ammoniak-Eindüsung eine Minimierung der NOx-Emissionen bewerkstelligt werden kann.

## Beschreibung

### Technisches Gebiet

Die vorliegende Erfindung betrifft eine Gasturbogruppe gemäss Oberbegriff des Anspruchs 1. Sie betrifft auch ein Verfahren zum Betreiben einer solchen Gasturbogruppe.

### Stand der Technik

Bei Gasturbinen mit einem sehr hohen Druckverhältnis, insbesondere bei Luftspeichergasturbine, entsteht in der Hochdruckbrennkammer infolge des hohen Verbrennungsdruckes verhältnismässig viel NOx. Wassereinspritzung oder Dampfeinblasung in die Flamme, an sich bekannte Nox-Reduktionsmethoden, sind aus thermodynamischen Gründen unerwünscht, insbesondere wenn es sich um Anlagen mit einer Abwärmenutzung handelt, wie dies beispielsweise bei einer Kombianlage der Fall ist.

Eine andere, thermodynamisch unschädliche NOx-Reduktionsmethode ist die sogenannte selektive Stickstoff- Konversion, welche mit einer simplen Ammoniak-Eindüsung in den Abgasstrom zustande kommt. Bedingung für die Wirksamkeit ist allerdings die Einhaltung eines Temperaturfensters von 800-900 Grad Celsius. Weil aber die Abgastemperatur von Gasturbinen viel niedriger ist, lässt sich diese an sich sehr einfache Methode nicht ohne weiteres anwenden.

### Darstellung der Erfindung

Hier will die Erfindung Abhilfe schaffen. Der Erfindung, wie sie in den Ansprüchen gekennzeichnet ist, liegt die Aufgabe zugrunde, bei einer Gasturbogruppe der eingangs genannten Art eine Ammoniak-Eindüsung zu bewerkstelligen.

Der wesentliche Vorteil der Erfindung ist darin zu sehen, dass schaltungstechnisch im Turbinenbereich ein Temperaturfenster individualisiert wird, bei welchem durch Eindüsung von Ammoniak eine Reduktion der NOx-Emissionen im Abgas zustandekommt, ohne dabei Wirkungsgradverluste in Kauf nehmen zu müssen.

Ein weiterer wesentlicher Vorteil der Erfindung ist darin zu sehen, dass es für die Eindüsungsstelle, bei welcher die Zwischentemperatur im für die Konversion günstigen Temperaturbereich von 800-900 Grad Celsius liegt, unwesentlich ist, ob stromab derselben einen zweiten Wärmeerzeuger für eine weitere Erwärmung der Arbeitsgase vorhanden ist oder nicht, denn ein zweiter Wärmeerzeuger verbrennt einen allfälligen NH3-Schlupf, so dass die NH3-Dosierung unkritisch ist. Darüber hinaus, die erneute NOx-Entwicklung in einem zweiten Wärmeerzeuger fällt minimiert aus, weil nur eine verhältnismässig kleine Brennstoffmenge in einem grossen Rauchgasstrom mit reduziertem O2-Gehalt verbrannt wird.

Vorteilhafte und zweckmässige Weiterbildungen der erfindungsgemässen Aufgabenlösung sind in den weiteren Ansprüchen gekennzeichnet.

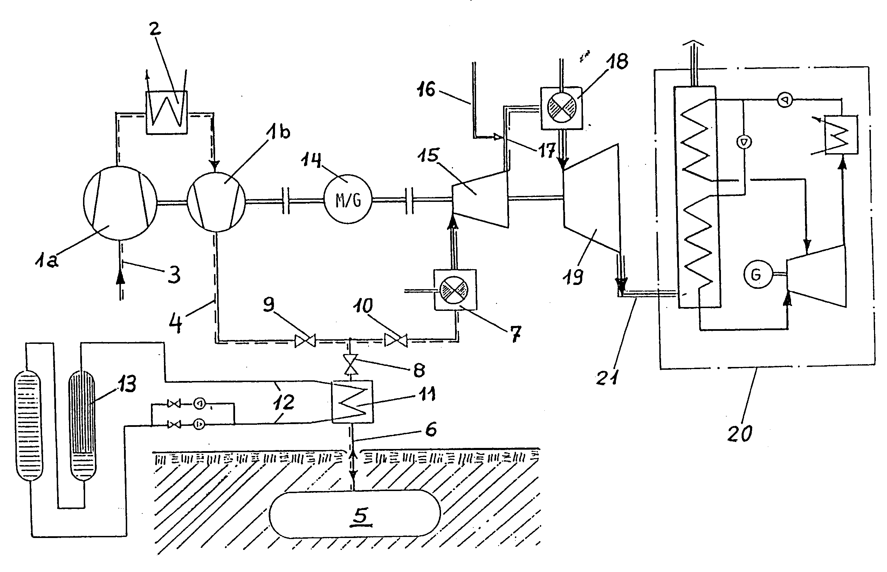

Im folgenden wird anhand der Zeichnung ein Ausführungsbeispiel der Erfindung näher erläutert. Alle für das unmittelbare Verständnis der Erfindung nicht erforderlichen Elemente sind fortgelassen. Die Strömungsrichtung der Medien ist mit Pfeilen angegeben.

### Kurze Beschreibung der Zeichnung

Die einzige Figur zeigt eine Luftspeichergasturbine mit einem Kombikraftwerk.

### Wege zur Ausführung der Erfindung, gewerbliche Verwertbarkeit

Die Figur zeigt eine Luftspeichergasturbine mit einem Kombikraftwerk. Eine Verdichtergruppe, bestehend aus einem ersten Verdichter 1a, einem zweiten Verdichter 1b, mit einem dazwischen geschalteten Zwischenkühler 2, verdichtet die angesaugte Luft 3 und fördert sie über eine Leitung 4 in eine Kaverne 5. Diese Förderung der verdichteten Luft zur Kaverne 5 geschieht über eine weitere Leitung 6, welche von der ersten Leitung 4 abzweigt. Die Leitung 4 ist zugleich Förderungsstrang zu einem ersten Wärmeerzeuger 7 der Anlage, wobei eine Reihe von Stellgliedern die betriebsmässige Schaltung der Leitungen 4, 6 untereinander übernehmen. Zunächst weist die Leitung 6 zur Kaverne 5 unmittelbar nach deren Abzweigung von der Leitung 4 ein Stellglied 8 auf, wobei stromauf und stromab desselben zwei weitere Stellglieder 9, 10 die Zuschaltbarkeit der jeweiligen Leitung gewährleisten. Eine Förderung der verdichteten Luft zur Kaverne 5 geschieht, indem das erste Stellglied 9 in der Leitung 4 und das Stellglied 8 in der Leitung 6 offen sind, während das zweite Stellglied 10 in der Leitung 4 geschlossen bleibt. Durch das Schliessen des Stellgliedes 8 in der Leitung 6 und gleichzeitiges Oeffnen der beiden Stellglieder 9, 10 in der Leitung 4 wird die Anlage als reine Gasturbine durchgeschaltet und betrieben. Stromab des Stellgliedes 8 in der Leitung 6 zur Kaverne 5 wirkt ein Wärmetauscher 11, der über ein Leitungssystem 12 mit einem thermischen Speicher 13 verbunden ist. Dieser Speicher 13 nimmt die Verdichtungsenthalpie der letzten Verdichterstufe 1b auf, wobei die Verdichter durch die als Motor arbeitende elektrische Maschine 14 angetrieben werden und so die zu speichernde Energie aus dem Stromnetz beziehen. Die im thermischen Speicher 13 enthaltene Verdichtungsenthalpie wird der kalten Speicherluft wieder zugeführt, so dass deren Arbeitsfähigkeit steigt. Es hat sich gezeigt, dass eine weitere Anhebung der Arbeitsmitteltemperatur mittels etwa mit einem gasförmigen Brennstoff betriebenen Wärmeerzeugers die Arbeitsfähigkeit nochmals signifikant erhöht, was von grossem ökonomischem Vorteil ist, denn die zusätzlichen Investitionen sind gemessen am Arbeitsgewinn klein. Erst so kann ein Luftspeicherkraftwerk überhaupt rentabel betrieben werden. Danebst muss aber berücksichtigt werden, dass um die Kosten für die Kaverne 5 so tief wie möglich zu halten, der Luftdruck so hoch wie möglich angesetzt werden muss: 50 bis 70 bar sind hier die Regel. Ein derart hoher Druck begünstigt aber die Entstehung von NOx im ersten Wärmeerzeuger 7, stromauf einer mit diesen Heissgasen zu beaufschlagenden Hochdruckturbine 15, was aus ökologischer Sicht unzulässig ist. Eine Wassereinspritzung oder Dampfeinblasung in den oder in die Wärmeerzeuger könnte zwar dieses Problem entschärfen, doch würde dadurch der Wirkungsgrad der Anlage sinken und die auf die Stromerzeugung bezogene CO2-Emission steigen. Der Grund dafür liegt in einem grösseren spezifischen Brennstoffverbrauch und im erhöhten Gehalt an latenter Wärme im Abgas. Hier wird Abhilfe geschaffen durch die Eindüsung von Ammoniak 16, welche stromab der Hochdruckturbine 15 vorgenommen wird. Dabei ist darauf zu achten, dass das Gefälle dieser Turbine 15 auslegungsmässig so zu wählen ist, dass die Arbeitsmitteltemperatur an der Eindüsungsstelle 17 zwischen 800 und 900 Grad Celsius beträgt. Die Regulierung für den Teillastbetrieb hat so vonstatten zu gehen, dass dieses Temperaturfenster für die NOx-Konversion erhalten bleibt. Um dies zu ermöglichen, soll für den Teillastbetrieb vorwiegend die Brennstoffzufuhr zum zweiten Wärmeerzeuger 18, stromauf einer Niederdruckturbine 19, reduziert werden. Weil in diesem Fall das Druckverhältnis der Hochdruckturbine 15 sich nach unten ausdehnt und ihre Austrittstemperatur absinkt, ist es von Vorteil, im Vollastpunkt an die obere Grenze des Temperaturfensters zu gehen. Es ist selbstverständlich auch möglich, für den Teillastbetrieb die verdichtete Luft am Eintritt in den ersten Wärmeerzeuger 7 durch das unmittelbar stromauf gelegene Stellglied 10 zu drosseln. Wie bereits erwähnt, kann die Anlage, bei entsprechender Disposition der Stellglieder, als reine Gasturbine betrieben werden: Die dargelegten NOx-Reduktionsmethoden durch Eindüsung von Ammoniak 16 an geigneter Stelle, haben uneingeschränkte Gültigkeit. Ferner gelten die dargelegten Zusammenhänge auch für den Fall einer dezentralen Anordnung zwischen der Verdichtergruppe 1a, 1b, 2 und der Turbinengruppe 15, 19, wobei der kavernenmässige Druckluftspeicher 5 die Gestalt einer langen Verbindungsleitung zum Transport von Energie annimmt. Zur weiteren Verbesserung des Wirkungsgrades und Leistungsfähigkeit der Anlage wird vorzugsweise ein sekundärer Dampfprozess 20, wie er beispielsweise in EP-B1-0 150 340 beschrieben wird, angekoppelt, welcher die Abgase 21 aus der Niederdruckturbine 19 in bekannter Weise weitgehend nutzt. An Stelle dieses Dampfprozesses 20 kann natürlich auch eine andere Abwärmenutzung treten, wie z.B. eine Fernheizung.

### (Nicht Bestandteil der Beschreibung)

### Bezeichnungsliste

- 1a, 1b: Verdichter
- 2: Zwischenkühler
- 3: Angesaugte Luft
- 4: Luftleitung
- 5: Kaverne
- 6: Luftleitung
- 7: Wärmeerzeuger
- 8, 9, 10: Stellglieder
- 11: Wärmetauscher
- 12: Leitungssystem
- 13: Thermischer Speicher
- 14: Elektrische Maschine
- 15: Hochdruckturbine
- 16: Ammoniak-Eindüsung
- 17: Eindüsungsstelle
- 18: Wärmeerzeuger
- 19: Niederdruckturbine
- 20: Dampfkreislauf
- 21: Abgase

## Patentansprüche

1. Gasturbogruppe mit oder ohne integriertem Dampfprozess, im wesentlichen bestehend aus mindestens einem Verdichter (1a, 1b), mindestens einer Gasturbine (15, 19) und mindestens einer elektrischen Maschine, wobei bei Aufteilung der Gasturbine in mehrere unabhängige Druckstufen in Strömungsrichtung stromauf der ersten Turbine ein erster Wärmeerzeuger und stromab der ersten Turbine ein weiterer Wärmeerzeuger plaziert sind, dadurch gekennzeichnet, dass stromab der ersten Turbine (15) und stromauf des weiteren Wärmeerzeugers (18) die Abgase aus der Turbine (15) mit Ammoniak (16) vermischbar sind.

2. Gasturbogruppe nach Anspruch 1, dadurch gekennzeichnet, dass die Zumischung mit Ammoniak (16) zwischen zwei in Reihe geschalteten Turbinen (15, 19) geschieht, wobei die erste Turbine (15) eine Hochdruckturbine ist, und die zweite Turbine (19) eine Niederdruckturbine ist.

3. Gasturbogruppe nach Anspruch 1, dadurch gekennzeichnet, dass in der Leitung 4 vom Verdichter 1b, stromauf des ersten Wärmeerzeugers (7) eine Leitung (6) zu einer Luftspeicherkaverne (5) abzweigt.

4. Gasturbogruppe nach Anspruch 3, dadurch gekennzeichnet, dass die Luftspeicherkaverne (5) über eine Reihe von Stellgliedern (8, 9, 10) mit der verdichteten Luft integrierbar ist.

5. Verfahren zum Betrieb einer Gasturbogruppe nach einem der Ansprüche 1-4, dadurch gekennzeichnet, dass Ammoniak (16) an einem Ort (17) den Abgasen zugemischt wird, wo ein Temperaturfenster zwischen 800 und 900 Grad Celsius vorherrscht.

6. Verfahren nach Anspruch 5, dadurch gekennzeichnet, dass bei Teillastbetrieb das Temperaturfenster aufrechterhalten wird, indem die Brennstoffzuführ zum weiteren stromab der Hochdruckturbine (15) gelegenen Wärmeerzeuger (18) reduziert wird.

7. Verfahren nach Anspruch 5, dadurch gekennzeichnet, dass bei Teillastbetrieb das Temperaturfenster aufrechterhalten wird, indem die verdichtete Luft am Eintritt in den stromauf der Hochdruckturbine (15) gelegenen Wärmeerzeuger (7) gedrosselt wird.
